# EUROPÄISCHE PATENTSCHRIFT

(11) **EP 1 815 901 B1**
(45) Veröffentlichungstag und Bekanntmachung des Hinweises auf die Patenterteilung: **31.08.2016**
(21) Anmeldenummer: 07002448.4
(22) Anmeldetag: 05.02.2007
(51) Int. Cl.: B01D 33/00, B01D 33/06, A01K 63/04

(54) **Trommelfilter**
Drum filter
Filtre à tambour

(30) Priorität: 03.02.2006 DE 102006005368; 17.07.2006 DE 102006033287; 25.09.2006 DE 102006045213
(43) Veröffentlichungstag der Anmeldung: 08.08.2007
(73) Patentinhaber: Sprick, Heinrich, 55543 Bad Kreuznach (DE)
(72) Erfinder: Sprick, Heinrich, 55543 Bad Kreuznach (DE)
(74) Vertreter: Winter, Brandl, Fürniss, Hübner, Röss, Kaiser, Polte - Partnerschaft mbB

(56) Entgegenhaltungen:
- WO-A-00/37159
- WO-A-03/022041
- DE-U1-202005 001 395
- US-A- 5 466 373
- US-A- 5 558 042

## Beschreibung

Die Erfindung betrifft einen Trommelfilter für Teichanlagen oder dergleichen gemäß dem Oberbegriff des Patentanspruchs 1.

Ein derartiger Filter ist beispielsweise unter www.hydrotech.se beschrieben und wird beispielsweise zum Reinigen/Klären von Teichwasser bei größeren Teichanlagen eingesetzt. Diese Reinigung ist insbesondere bei Koi-Teichanlagen wichtig, da die Haltung dieser Tiere es erfordert, die Teichwasserqualität innerhalb relativ enger Grenzen konstant zu halten. Bei den bekannten Trommelfiltern wird das Teichwasser durch eine Pumpe oder durch Schwerkraft zunächst über einen stirnseitigen Zufluss in das Innere einer stirnseitig offenen drehbaren Filtertrommel geleitet und strömt dann radial durch die als Filtermittel ausgeführte Außenwandung des Filters hindurch, so dass sich der Filterkuchen an der Innenumfangswandung der Trommel ausbildet. Das geklärte Filtrat wird dann aus einem die Trommel umgebenden Filtergehäuse abgezogen und beispielsweise einem biologischen Filter zugeführt.

Um eine ordnungsgemäße Funktion eines derartigen Filters zu gewährleisten, sollte der Wasserspiegel im Inneren des Filters nicht über ein Viertel des Trommeldurchmessers ansteigen. Durch den an der Innenumfangswandung entstehenden Filterkuchen wird der Filter zugesetzt, so dass der Wasserspiegel allmählich ansteigt. Die Höhe des Wasserspiegels wird über einen Sensor erfasst, der bei Überschreiten des Maximalwasserspiegels ein Signal an eine Reinigungseinrichtung abgibt. Diese ist beim bekannten Filter durch eine am Außenumfang der Filtertrommel angeordnete Sprüheinrichtung gebildet, durch die Reinigungswasser durch das Filtermaterial hindurch auf den Filterkuchen gerichtet wird, so dass dieser von der Innenumfangswandung der Trommel gelöst und in eine Auffangeinrichtung fällt, aus der er abgezogen wird. Bei dem bekannten Filter ist es weiterhin erforderlich, dass insbesondere stirnseitig Dichtungseinrichtungen vorgesehen werden müssen, um den Innenraum der Trommel gegenüber dem sie umgebenden Gehäuse abzudichten. Die Investitionskosten für derartige Trommelfilter sind relativ hoch, so dass diese nur bei großen Teichanlagen eingesetzt werden.

In der WO 03/02204 A1 ist eine fischwirtschaftliche Filteranlage gezeigt, bei der ein stirnseitig offener Trommelfilter zur Reinigung des Nutzwassers verwendet wird. Dieser Trommelfilter zeigt im Prinzip die gleichen Nachteile wie der oben beschriebene Filter.

Dem gegenüber liegt der Erfindung die Aufgabe zugrunde, einen preiswerten Trommelfilter zu schaffen.

Diese Aufgabe wird durch einen Trommelfilter mit den Merkmalen des Patentanspruchs 1 gelöst.

Erfindungsgemäß wird die Filtertrommel zum Gehäuse des Trommelfilters hin stirnseitig geschlossen ausgeführt. Dies ermöglicht einen wesentlich einfacheren Aufbau des Trommelfilters als bei herkömmlichen Lösungen, bei denen die Filtertrommel einseitig offen gleitend an einer Gehäusewandung geführt ist. Dem Konstrukteur bleiben bei der erfindungsgemäßen Lösung wesentlich mehr Gestaltungsfreiheiten für die Gehäusekonstruktion. Es zeigte sich des Weiteren, dass bei der beideseitig stirnseitig geschlossenen Filtertrommel der Filter mit kompakteren Abmessungen ausführbar ist, da die geschlossene Filtertrommel wesentlich höhere Flüssigkeitspegel zuläßt. Dabei wird der Trommelfilter von innen nach außen durchströmt. Die Filtertrommel und das Gehäuse des Filters sind aus Kunststoff gefertigt, wobei vorzugsweise lebensmittelechtes Polyethylen verwendet wird. Ein derartiger Trommelfilter ist bei zumindest gleicher Filterwirkung zu einem Bruchteil des Preises eines herkömmlichen Filters realisierbar. Die Geräuschentwicklung ist dadurch minimiert, dass oberhalb des Flüssigkeitsspiegels angeordnete Bauelemente des Trommelfilters mit einer geeigneten Abdeckung überdeckt sind. Diese Überdeckung ist vorzugsweise so ausgebildet, dass sie mit ihren Randabschnitten in das Flüssigkeitsvolumen eintaucht.

Bei einem erfindungsgemäßen Ausführungsbeispiel erfolgt die Zu- oder Abführung der Flüssigkeit durch einen Achsstutzen der Filtertrommel hindurch. D. h., dieser Achsstutzen hat eine Doppelfunktion: einmal die Zu-/Abführung der Flüssigkeit und zum Anderen die Lagerung der Filtertrommel. Eine derartige Ausführung erfordert lediglich eine Abdichtung im Bereich der Trommellagerung so dass der vorrichtungstechnische Aufwand gegenüber den herkömmlichen Lösungen weiter minimiert ist.

Der Ablauf der zu klärenden Flüssigkeit erfolgt vorzugsweise stirnseitig, vorzugsweise im Bereich einer Trommellagerung. Die Abfuhr der zu klärenden Flüssigkeit kann dabei beispielsweise durch einen Achsstutzen der Filtertrommel hindurch verlaufen, so dass der vorrichtungstechnische Aufwand zur Ausbildung dieses Ablaufs minimal ist und lediglich eine Abdichtung im Bereich der Trommellagerung vorgesehen werden muss.

Die Reinigung der Filtertrommel kann auf besonders einfache Weise durchgeführt werden, in dem dieser eine Bürste oder eine ähnliche mechanische Reinigungseinrichtung zugeordnet ist, die achsparallel zur Filtertrommel angeordnet wird und auf einen Außenumfangsabschnitt von dieser Trommel wirkt. Diese Reinigungseinrichtung kann mit einem Antrieb versehen sein, um die Relativgeschwindigkeit zwischen der Filtertrommel und der Reinigungseinrichtung zu vergrößern. Dieser Antrieb ist vorzugsweise in seiner Drehrichtung umkehrbar ausgeführt.

Es ist bevorzugt, wenn die Filtertrommel einen hohlen Achsstutzen hat, der den Zulauf für die zu klärende Flüssigkeit ausbildet, während der Ablauf des geklärten Filtrats am Gehäuse vorgesehen ist.

Um zu verhindern, dass der Filterkuchen, Laub etc. während der Rotation der Filtertrommel wieder in die zu klärende Flüssigkeit zurückfällt, können an der Innenumfangswandung der Filtertrommel Rückhalteeinrichtungen ausgebildet werden.

Der Abzug dieses Filterkuchens erfolgt vorzugsweise mittels eines Auffangbehälters innerhalb der Filtertrommel, aus dem der Filterkuchen über ein Ablaufrohr abgezogen wird. Sowohl der Auffangbehälter als auch das Ablaufrohr sind gehäusefest gelagert.

Bei einem besonders einfach ausgebildetem Ausführungsbeispiel wirkt das Ablaufrohr als Achse der Filtertrommel, die eine vom hohlen Achsstutzen entfernte Stirnseite der Filtertrommel durchsetzt.

Bei einer alternativen Lösung kann sich das Ablaufrohr auch durch den hohlen Achsstutzen hindurch erstrecken, so dass eine gesonderte Lagerung an der anderen Stirnseite der Filtertrommel vorgesehen werden muss.

Die Effektivität der Reinigung lässt sich weiter verbessern, wenn die Reinigungseinrichtung mit einer Sprühvorrichtung ausgeführt ist, über die die Reinigungsflüssigkeit, beispielsweise geklärtes Teichwasser auf den Außenumfang der Filtertrommel und/oder einer Bürste gerichtet werden kann, um Feststoffe abzulösen.

Die Ansteuerung der Reinigungseinrichtung erfolgt über einen Sensor, mit dem der Wasserspiegel in der Filtertrommel oder im Filtergehäuse erfasst wird, so dass die Reinigungseinrichtung bei Abweichungen des Wasserspiegels von einem Sollwert betätigt wird, um den Filter zu reinigen.

Bei einer besonders einfach aufgebauten Lösung sind der Antrieb der Filtertrommel und der Antrieb der Reinigungseinrichtung gekoppelt.

Zur Verringerung von Geräuschemissionen ist es vorteilhaft, eine Pumpe zur Förderung der zu reinigenden Flüssigkeit als eine Art Tauchpumpe in das Flüssigkeitsvolumen des Filters einzusetzen, so dass die Emissionen durch das die Pumpe umgebende Wasser absorbiert werden können.

Um ein Anhaften von Feststoffen, beispielsweise Laub an mit Bezug zur Filtertrommel stillstehenden oder relativ beweglichen Bauelementen des Trommelfilters zu vermeiden, kann an der Innenumfangswandung der Filtertrommel eine Bürste oder ein Abstreifer vorgesehen werden, der die Feststoffe (Laub) von den genannten Bauelementen, beispielsweise den Umfangskanten eines Auffangbehälters abstreift.

Sonstige vorteilhafte Weiterbildungen der Erfindung sind Gegenstand weiterer Unteransprüche.

Im Folgenden werden ein bevorzugte Ausführungsbeispiele der Erfindung anhand schematischer Zeichnungen näher erläutert. Es zeigen:
Figur 1 eine stark vereinfachte Vorderansicht eines nicht zur Erfindung gehörenden Trommelfilters;
Figur 2 eine Seitenansicht des Trommelfilters aus Figur 1;
Figur 3 eine Vorderansicht eines Ausführungsbeispiels eines erfindungsgemäßen Trommelfilters;
Figur 4 eine Seitenansicht des Trommelfilters aus Figur 3;
Figur 5 eine Spanneinrichtung für ein Filtergewebe des Trommelfilters und
Figur 6 ein Ausführungsbeispiel mit verbesserter Geräuschdämmung.

Die im Folgenden beschriebenen Trommelfilter 1 werden vorzugsweise bei Teichanlagen, insbesondere bei Teichanlagen zur Koi-Haltung eingesetzt.

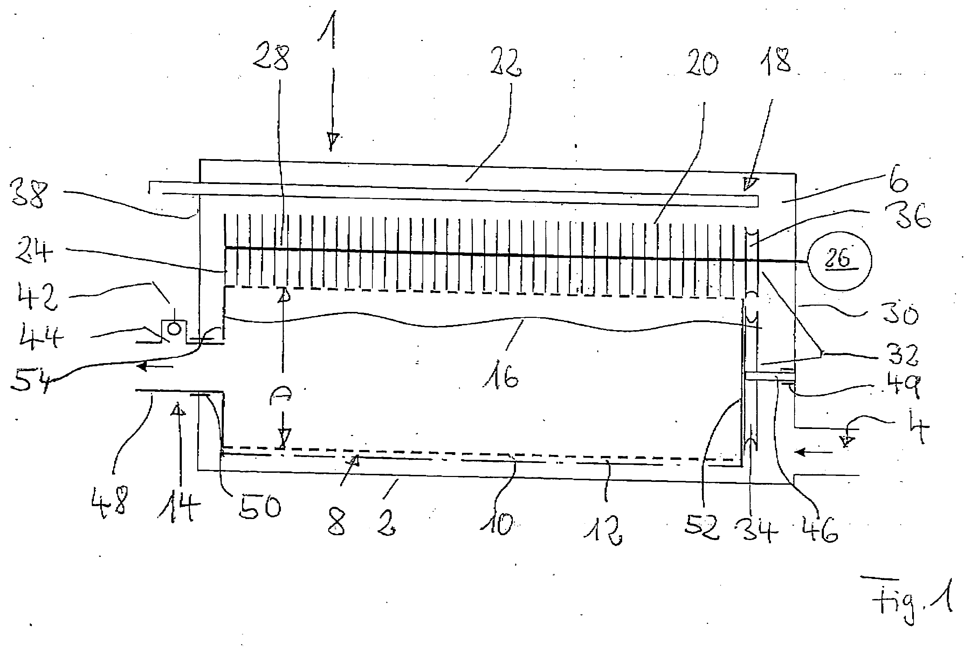

Der in Figur 1 in der Vorderansicht gezeigte Trommelfilter 1 hat ein Gehäuse 2, das über einen in der Figur 1 nicht dargestellten Deckel von Oben (Ansicht nach Figur 1) geöffnet werden kann.

Das Gehäuse 2 hat im Bereich seines Bodens stirnseitig einen Zulauf 4 für das zu klärende/reinigende Teichwasser. Diese wird mittels einer Pumpe oder durch Schwerkraftförderung in einen Innenraum 6 des Gehäuses 2 gefördert und durchströmt in Radialrichtung von Außen nach Innen eine im Gehäuse 2 gelagerte, zum Gehäuse 2 hin stirnseitig geschlossene Filtertrommel 8, deren Außenumfangswandung entweder mit einem Filtergewebe bedeckt oder als Spaltsieb 10 ausgeführt ist. Die in der zu klärenden Flüssigkeit enthaltenen Feststoffe setzen sich als strichpunktiert angedeuteter Filterkuchen 12 am Außenumfang der Filtertrommel 8 ab. Das von den Feststoffen befreite Filtrat wird dann über einen Auslauf 14 abgezogen und zu einer weiteren Filtereinrichtung, beispielsweise einem biologischen Filter oder zurück in den Teich gefördert. Der Volumenstrom des Teichwassers ist so eingestellt, dass sich im Inneren des Trommel-filters ein Wasserspiegel 16 einstellt, der etwa 3/4tel des Filtertrommeldurchmessers D beträgt.

Der Filtertrommel 8 ist eine Reinigungseinrichtung 18 zugeordnet, die beim dargestellten Trommelfilter im Wesentlichen aus einer Bürste 20 und einer Sprüheinrichtung 22 besteht. Anstelle der Bürste 20 kann selbstverständlich auch eine andere geeignete Einrichtung zum Abstreifen des Filterkuchens vom Außenumfang verwendet werden.

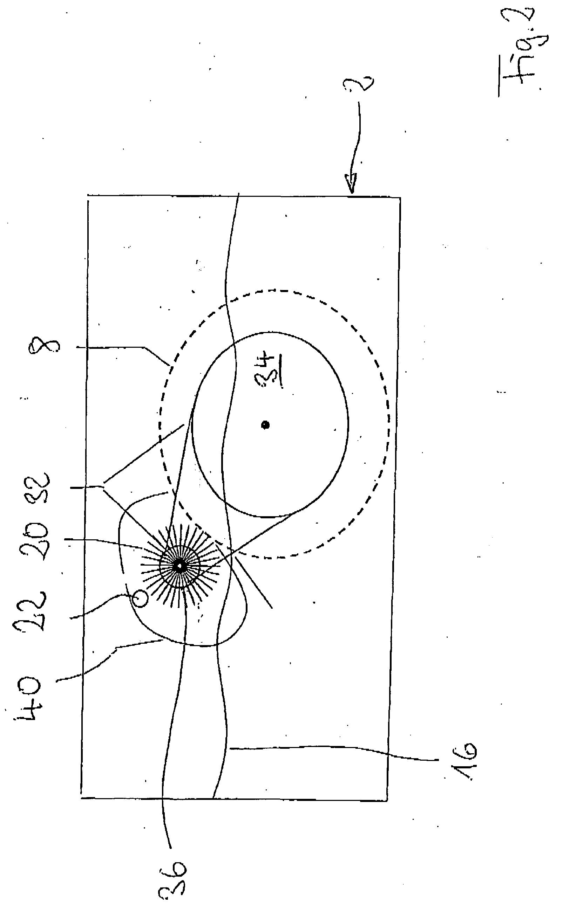

Bei dem in den Figuren 1 und 2 dargestellten Trommelfilter 1 ist die Bürste 20 achsparallel zur Filtertrommel 8 angeordnet, so dass die radial vorstehenden Reinigungsbürsten 24 am Außenumfang der Filtertrommel 8 anliegen. Der Antrieb der Bürste 20 erfolgt mittels eines Getriebemotors 26, der vorzugsweise drehzahlvariabel und in der Drehrichtung umkehrbar ausgeführt ist. Dieser Getriebemotor 26 ist an eine Bürstenwelle 28 gekuppelt und außerhalb des Gehäuses an einer Stirnwandung 30 befestigt, die von der Bürstenwelle 28 dichtend durchsetzt ist. Beim dargestellten Ausführungsbeispiel ist die Bürstenwelle 28 über einen Riementrieb 32 mit der Filtertrommel 8 verbunden.

Da die Rotationsgeschwindigkeit der Filtertrommel 8 geringer sein soll als diejenige der Bürste 28 ist die filtertrommelseitige Riemenscheibe 34 mit einem wesentlich größeren Durchmesser als die Riemenscheibe 36 auf der Bürstenwelle 28 ausgeführt. Bei Verwendung eines herkömmlichen Riementriebs 32 drehen sich die Filtertrommel 8 und die Bürste 20 gleichläufig - durch entsprechende Ausgestaltung des Übertragungsgetriebes kann jedoch auch eine gegenläufige Rotation von Bürste 20 und Filtertrommel 8 eingestellt werden. Beim dargestellten Trommelfilter ist die größere Riemenscheibe 34 an der Stirnseite der Filtertrommel 8 befestigt.

Die Sprüheinrichtung 22 ist als mit einer Vielzahl von Düsen ausgebildetes Sprührohr ausgeführt, das die in Figur 1 linke Stirnwandung 38 des Gehäuses 2 durchsetzt und an eine Sprühmittelversorgung angeschlossen ist. Über dieses Sprührohr wird Flüssigkeit auf den Außenumfang der Trommel 8 und/oder der Bürste 20 gerichtet, um Feststoffe abzuspülen.

Wie insbesondere in der Seitenansicht gemäß Figur 2 sichtbar ist, sind die Sprüheinrichtung 22 und die Bürste 20 in einem Auffangbehälter 40 angeordnet, der gleichzeitig auch als Spritzschutz dient. Der Auffangbehälter 40 ist so ausgeführt, dass die vom Außenumfang der Filtertrommel 8 entfernten Feststoffe in den Auffangbehälter 40 fallen und somit nicht in das Filtrat gelangen. Der Innenraum des Auffangbehälters 40 kann über die Sprüheinrichtung 22 gespült werden, so dass die Feststoffe über einen nicht dargestellten Abfluss aus dem Auffangbehälter 40 und dem Gehäuse 2 herausgespült werden können. Dieses Herausspülen kann auch mittels einer Wasserleitung erfolgen, die an den Auffangbehälter 40 angeschlossen ist und die zum Spülen über ein Magnetventil oder dergleichen geöffnet wird.

Selbstverständlich kann die Siebtrommel 8 auch mit einem eigenen Antrieb ausgeführt werden, so dass die Relativgeschwindigkeit zwischen Bürste 20 und Siebtrommel 8 sowie die Relativdrehung frei wählbar ist.

Bei dem dargestellten Trommelfilter 1 wird die Höhe des Wasserspiegels 16 durch einen Schwimmer 42 erfasst, der in einem im Bereich des Auslaufs 14 angeordneten Steigrohr 44 ausgebildet ist. Dessen Höhe ist so gewählt, dass sich nach dem Prinzip der kommunizierenden Röhren der Wasserspiegel 16 in der Siebtrommel 16 erfassen lässt.

Die Lagerung der Siebtrommel 8 im Gehäuse 2 erfolgt bei der dargestellten Variante im Bereich des Riementriebs 30 über einen an der rechten Stirnfläche der Siebtrommel 8 befestigten Wellenstummel 46 der an der Stirnwandung 30 des Gehäuses 2 über ein Gleitlager 49 gelagert ist. Die in Figur 1 linke Lagerung der Trommel 8 erfolgt über einen rohrförmigen Achsstutzen 48, der sich zum Innenraum der Trommelfilter 8 hin öffnet. Dieser Achstutzen 48 durchsetzt die linke Stirnwandung 38 des Gehäuses und ist darin über ein angedeutetes Gleitlager 50 dichtend geführt. Die Dichtwirkung kann verbessert werden, wenn im Bereich zwischen dem Gleitlager 50 und dem Außenumfang des Achsstutzens 48 ein Dichtring ausgeführt wird der beispielsweise als Schaumstoffring oder dergleichen ausgeführt ist.

Diese Konstruktion erlaubt eine äußerst einfache Abdichtung des Trommelinnenraums im Bezug zum Gehäuseinnenraum, da im Prinzip lediglich im Bereich des Gleitlagers 50 eine geeignete Dichtung vorgesehen werden muss.

Bei dem dargestellten Trommelfilter 1 sind die Filtertrommel 8 und das Gehäuse 2 aus Kunststoff, vorzugsweise Polyethylen gefertigt, so dass die Investitionskosten äußerst gering sind. Es zeigt sich, dass durch diese Materialwahl die Abdichtung besonders einfach ist, da der Achsstutzen 48 gleitend auf einer Polyethylenbuchse der Stirnwandung 38 geführt ist und keine zusätzlichen Lagerelemente erforderlich sind. Die Gleitführung stellte sich als so dicht heraus, dass sie zur Abdichtung des Gehäuses 2 ausreicht.

Die zu reinigende Flüssigkeit wird über den Zulauf 4 in das Gehäuse 2 eingeleitet und tritt durch das Spaltsieb 10 am Außenumfang der Filtertrommel 8 hindurch in den Trommelinnenraum ein. Die in der zu klärenden Flüssigkeit befindlichen Schmutz- und Schwebstoffe lagern sich dabei auf der Filtertrommel 8 ab und bilden einen Filterkuchen, der mit der Zeit immer größer wird, so dass sich der Filter allmählich zusetzt. Dadurch wird der Volumenstrom der in den Filterinnenraum eintretenden Flüssigkeit verringert. In dem Fall, in dem das Filtrat über eine Pumpe im Auslauf 14 abgezogen wird, würde dann der Wasserspiegel 16 im Inneren der Filtertrommel 8 absinken.

Bei einem anderen Konzept wird die zu filtrierende Flüssigkeit durch eine Pumpe über den Zulauf 4 zum Filter gefördert, dabei würde der Wasserspiegel im Innenraum 6 ansteigen. Bei diesem Konzept müsste der Schwimmer 42 den Wasserspiegel im Innenraum erfassen.

Wird vom Schwimmer 42 eine entsprechende Wasserspiegeländerung erfasst (beim erstgenannten Konzept in der Filtertrommel 8, beim zuletzt genannten Konzept im Innenraum 6), so wird ein Signal an den Motor 26 der Bürste 20 abgegeben, so dass diese dreht und den Filterkuchen abstreift und in den Auffangbehälter 40 einwirft, aus dem der Filterkuchen 12 durch die beschriebene Spüleinrichtung ausgespült werden kann. In dem Fall, in dem die Bürste 20 einen eigenen Antrieb hat, ist die Drehrichtung der Reinigungsbürsten 24 frei wählbar, so dass diese gegenläufig zur Filtertrommel 8 oder gleichläufig zur Filtertrommel 8 angetrieben werden, wobei die erstgenannte Alternative bevorzugt ist. Beim gegenläufigen Antrieb kann eine eigene Spritzhülse über der Bürste angeordnet werden.

Bei einer besonders einfachen Lösung kann auf die Bürste 20 verzichtet werden, so dass die Reinigung alleine über die Sprüheinrichtung 22 erfolgt, wobei deren Düsen so ausgerichtet sein sollten, dass die Sprühstrahlen etwa tangential zur Oberfläche der Filtertrommel 8 ausgerichtet sind, um den Filterkuchen 12 in optimaler Weise abzulösen und in Richtung zur Auffangschale zu fördern.

Durch die Rotation der Filtertrommel 8 taucht der gereinigte Bereich wieder in die Flüssigkeit ein, so dass die Flüssigkeit wieder das Spaltsieb 10 durchströmen kann und der Wasserspiegel wieder in den Sollbereich gebracht wird. Dies wird über den Schwimmer 42 erfasst, worauf dieser die Reinigungseinrichtung 18 abschaltet.

Ein Vorteil des vorbeschriebenen Systems liegt darin, dass für die abschnittsweise betriebene mechanische Reinigungseinrichtung praktisch keine zusätzliche Energie aufgewendet werden muss. Bei bekannten Lösungen ist es erforderlich, den Filter entweder laufend oder mit sehr aufwendigen Spülsystemen (durch das Filtergewebe hindurch) zu reinigen, so dass der Energieaufwand um ein vielfaches höher ist.

Vorversuche zeigten, dass die Reinigungseinrichtung 6 nur während ca. 1 % der Betriebsdauer genutzt werden muss. Aufgrund des hohen Wasserstandes und der damit einhergehenden großen Filterfläche kann der erfindungsgemäße Filter wesentlich kompakter als der eingangs genannte Filter ausgeführt werden. Selbstver-ständlich kann der dargestellte Filter auch aus anderen Materialien, beispielsweise aus Edelstahl hergestellt werden.

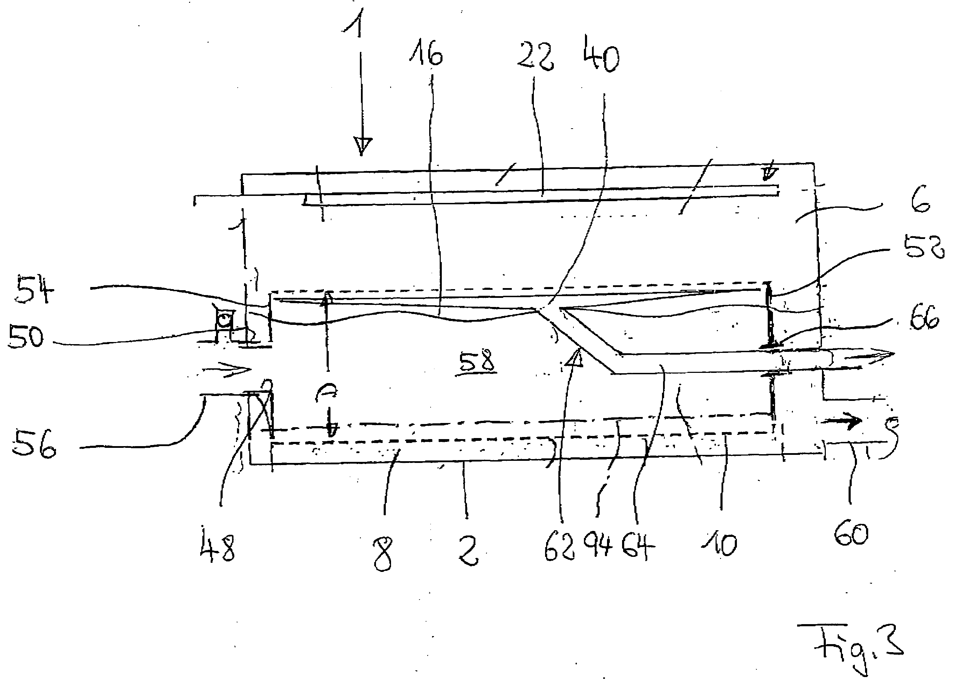

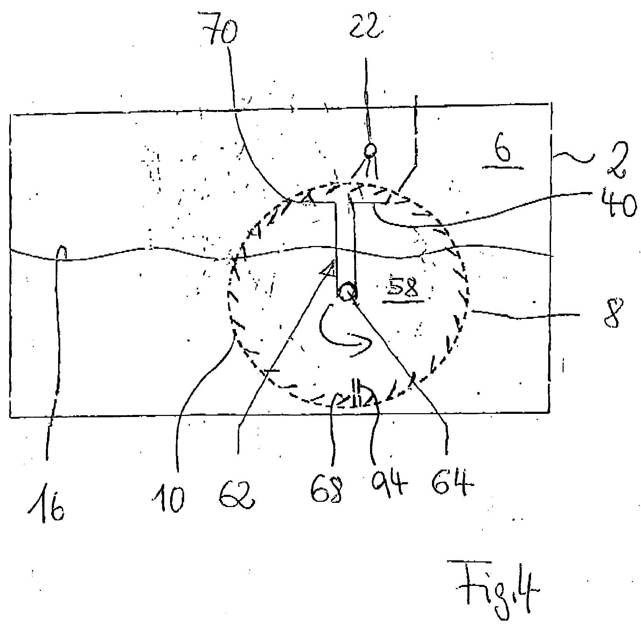

Bei dem vorbeschriebenen Trommelfilter 1 wird die Filtertrommel 8 in Radialrichtung von Außen nach Innen durchströmt. Erfindungsgemäß wird eine Durchströmung in umgekehrter Richtung von Innen nach Außen bevorzugt. Ein derartiges Ausführungsbeispiel wird anhand der Figuren 3 und 4 erläutert. Der Einfachheit halber werden bei den folgenden Ausführungen für einander entsprechende Bauelemente die gleichen Bezugszeichen wie in den Figuren 1 und 2 verwendet.

Wie bei diesem Trommelfilter 1 ist die Filtertrommel 8 in dem Gehäuse 2 gelagert und stirnseitig geschlossen ausgeführt. Dieser stirnseitige Abschluss erfolgt durch Stirnplatten 52, 54, die im Axialbereich mit im Folgenden noch näher erläuterten Lagerelementen für die Filtertrommel 8 ausgeführt sind. Diese Stirnplatten 52, 54 werden vom Spaltsieb 10 oder einem Filtergewebe umgriffen, so dass die Filtertrommel einen etwa zylinderförmigen Aufbau hat. Die in den Figuren 1 und 2 beschriebene Filtertrommel hat einen entsprechenden Aufbau und verfügt ebenfalls über die Stirnplatten 52, 54.

Bei dem in Figur 3 ausgeführten erfindungsgemäßen Ausführungsbeispiel ist an der linken Stirnplatte 54 ein hohler Achsstutzen 48 ausgebildet, der gleitend in einem Gleitlager 50 des Gehäuses 2 geführt ist. Dieser Achsstutzen ist hydraulisch mit einem Flüssigkeitszulauf 56 verbunden, durch den hindurch die zu klärende Flüssigkeit in den von der Filtertrommel 8 umgriffenen Raum 58 geführt wird, so dass sich im Gehäuse 2 und in der Filtertrommel 8 ein Flüssigkeitsstand mit dem Spiegel 16 ausbildet. Der Filterkuchen setzt sich an den Innenumfangswandungen des Spaltsiebs 10 ab und die geklärte Flüssigkeit (Filtrat) strömt über das Spaltsieb 10 in den Innenraum 6 des Gehäuses 2 und wird dann über einen Filtratablauf 60 des Gehäuses 2 abgezogen.

Bei diesem Ausführungsbeispiel ist der Auffangbehälter 40 im Raum 58 der Filtertrommel 8 ortsfest angeordnet. Gemäß den Darstellungen in Figur 3 und 4 ist dieser Auffangbehälter 40 schalenförmig ausgeführt und vertieft sich zu einem Filterkuchenablauf hin, an den ein Filterkuchenablaufrohr 62 angeschlossen ist. Beim dargestellten Ausführungsbeispiel erstreckt sich dieses Rohr zunächst mit einem schräg angestellten Schenkel bis in Achsrichtung der Filtertrommel 8 und geht dann in einen koaxial zur Achse verlaufenden Achsschenkel 64 über, der die rechte Stirnplatte 52 durchsetzt. Diese Stirnplatte 52 ist wiederum mit einem Gleitlager 56 versehen, über das die Filtertrommel 8 auf den Aussenumfang des Achsschenkels 64 gelagert ist. Das Filterkuchenablaufrohr 62 durchsetzt die Gehäusewandung, so dass der Filterkuchen abgezogen werden kann. Das Ablösen des Filterkuchens vom Spaltsieb 10 erfolgt mittels einer oberhalb der Filtertrommel 8 angeordneten Sprüheinrichtung 22, bei deren Betätigung der Filterkuchen vom Spaltsieb 10 gelöst wird und nach unten in den Auffangbehälter 40 fällt und über das Filterkuchenablaufrohr 62 aus dem Trommelfilter 1 herausgespült wird.

Auch bei diesem Trommelfilter 1 wird der Wasserspiegel 16 über einen Flüssigkeitsmelder erfasst und in Abhängigkeit von der Höhe des Wasserspiegels 16 die Sprüheinrichtung betätigt. Diesbezüglich gelten die Ausführungen zum Ausführungsbeispiel gemäß den Figuren 1 und 2 entsprechend.

Bei diesem Trommelfilter 1 kann auf eine Reinigungsbürste verzichtet werden - bei besonders hohen Ansprüchen kann jedoch auch im Raum 58 eine Bürste zum Abstreifen des Filterkuchens in der Filtertrommel 8 vorgesehen werden. Um sicherzustellen, dass sich der Filterkuchen nur im Bereich des Auffangbehälters 40 vom Spaltsieb 10 löst, sind an der Innenumfangswandung der Filtertrommel 8 eine Vielzahl von Rückhalteeinrichtungen vorgesehen, die den Filterkuchen im Bereich des Spaltsiebs 10 festhalten. Bei dem dargestellten Ausführungsbeispiel sind die Rückhalteeinrichtungen durch schräg angestellte, senkrecht zur Zeichenebene in Figur 4 und etwa achsparallel verlaufende Rückhaltelamellen 68 ausgebildet. Diese sind derart gestaltet, dass der Filterkuchen im Bereich der Flüssigkeit zurückgehalten wird und im Bereich des Auffangbehälters 40 durch die Sprüheinrichtung 22 abgelöst werden kann, so dass er in den Auffangbehälter 40 fällt. Die Rückhaltelamellen 68 sind sieb- oder kammartig ausgebildet, so dass Flüssigkeit ablaufen kann und Feststoffe zurückgehalten werden. Gemäß Figur 4 ist dieser so ausgestaltet, dass der Spalt zwischen der Innenumfangswandung der Filtertrommel 8 und Seitenwandungen 70 des Auffangbehälters 40 minimal ist. Die Anstellung der Rückhaltelamellen 68 ist so gewählt, dass sie sich in Drehrichtung gesehen weiter von dem Spaltsieb 10 wegerstrecken und somit der Filterkuchen bei der Rotation nach oben "geschaufelt" wird.

Anstelle dieser schaufelförmigen Rückhaltelamellen 68 können auch andere Rückhalteinrichtung, beispielsweise würfelförmige Körper oder dergleichen ausgebildet sein, um auch Fremdstoffe, wie beispielsweise Blätter, Äste etc. zurückzuhalten.

Der Antrieb der Filtertrommel erfolgt entsprechend wie beim eingangs beschriebenen Trommelfilter.

Falls relativ viel Laub in der zu filternden Flüssigkeit enthalten ist, kann sich dieses an den oben liegenden Umfangskanten des Auffangbehälters 40 absetzen, so dass sich ein Stau ausbilden kann, der den Abtransport des Filterkuchens zum Auffangbehälter 40 hin behindert. Um ein Zusetzen des Bereichs zwischen den Umfangskanten des Auffangbehälters 40 und der Innenumfangswand der Filtertrommel 8 und den daran befestigten Rückhaltelamellen 68 zu verhindern, kann - wie in den Figuren 3 und 4 angedeutet - anstelle einer Rückhaltelamelle 68 oder im Bereich zwischen den Rückhaltelamellen 68 eine vergleichsweise weiche Bürste oder ein ähnlicher biegeelastischer Körper 94 vorgesehen werden, der radial nach innen in den Innenraum 58 vorsteht und bei der Rotation der Filtertrommel 8 die oben liegenden Umfangskanten des Auffangbehälters 40 überstreift und somit das Laub entfernt - ein Aufstauen kann so dadurch zuverlässig vermieden werden.

Anstelle einer einzigen, in den Figuren 3 und 4 angedeuteten Bürste können selbstverständlich auch mehrere Bürsten über den Innenumfang der Filtertrommel 8 verteilt werden.

Auch bei dem erfindungsgemäßen Ausführungsbeispiel gemäß Figur 3 und 4 kann der Wasserspiegel 16 wesentlich höher als bei den herkömmlichen Lösungen gehalten werden. Dadurch kann die Filtertrommel bei gleichgroßer Filteroberfläche kleiner als herkömmliche Lösungen ausgeführt werden.

Im Übrigen kann auf die Ausführungen zum erstgenannten Ausführungsbeispiel verwiesen werden. Bei einer Variante des vorbeschriebenen Ausführungsbeispiel kann sich das Filterkuchenablaufrohr 62 auch durch den Achsstutzen 48 hindurch erstrecken. In diesem Fall müsste im Bereich der rechten Stirnplatte 54 dann beispielsweise entsprechend dem ersten Ausführungsbeispiel ein Wellenstummel vorgesehen werden, der in einem Gleitlager des Gehäuses 2 gelagert ist.

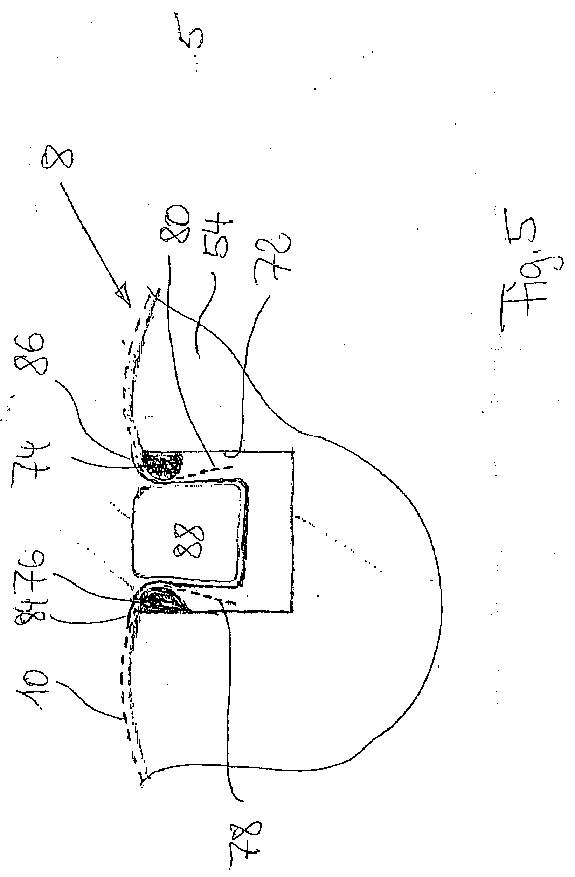

Figur 5 zeigt eine Möglichkeit zum Spannen des Spaltsiebs 10 der Filtertrommel 8. Dieses Spaltsieb kann beispielsweise als Edelstahlsieb oder als Filtergewebe aus Polyester oder dergleichen ausgeführt sein. Figur 5 zeigt eine Seitenansicht auf die Stirnplatte 54 der Filtertrommel. Diese Stirnplatte 54 hat eine Ausnehmung, in die ein U-Profil 72 eingesetzt ist, das sich in Radialrichtung nach Innen erweitert. Beim dargestellten Ausführungsbeispiel wird diese Erweiterung durch zwei sich entlang des U-Profils 72 erstreckende Klemmnocken 74, 76 bewirkt, die am U-Profil 72 im Bereich des Außenumfangs der Filtertrommel 8 ausgebildet sind. Dieses U-Profil 72 erstreckt sich von der Stirnplatte 54 bis zur gegenüberliegenden Stirnplatte 52 und bildet somit eine Längsverbindung zwischen diesen Stirnplatten 52, 54. Zum Spannen des Spaltsiebs 10 werden dessen einander zuweisende Längskantenbereiche 78, 80 jeweils um eine der Klemmnocken 74, 76 umgelegt, so dass diese Längskantenbereiche 78, 80 nach Innen in den vom U-Profil 72 umgriffenen Raum eintauchen. Anschließend wird ein Klemmprofil 82 von außen her eingesetzt, so dass die beiden Endabschnitte des Spaltsiebs 10 gegen die Anlageflächen der Klemmnocken 74 bzw. 76 gepresst werden. Gemäß Figur 5 ist dieses Klemmprofil 82 ebenfalls U-förmig ausgebildet und erweitert sich radial nach Außen zu zwei aufgeweiteten Halteschenkeln 84, 86, über die die Radialposition des Klemmprofils 82 festgelegt ist. Die Relativfixierung zwischen Klemmprofil 82 und U-Profil 72 erfolgt dann durch Einsetzen eines sich achsparallel erstreckenden Klemmkeils 88, der ebenfalls in Radialrichtung nach innen hin erweitert ist, so dass dieser nicht radial nach außen aus seiner Klemmposition herausrutschen kann. D. h., dieser Klemmkeil kann nur durch achsparalleles Einsetzen in das Klemmprofil 82 montiert werden. Diese Konstruktion mit zwei Klemmprofilen und Lagefixierung über einen Klemmkeil 88 ermöglicht ein äußerst einfaches Spannen und Montieren des Spaltsiebs 10.

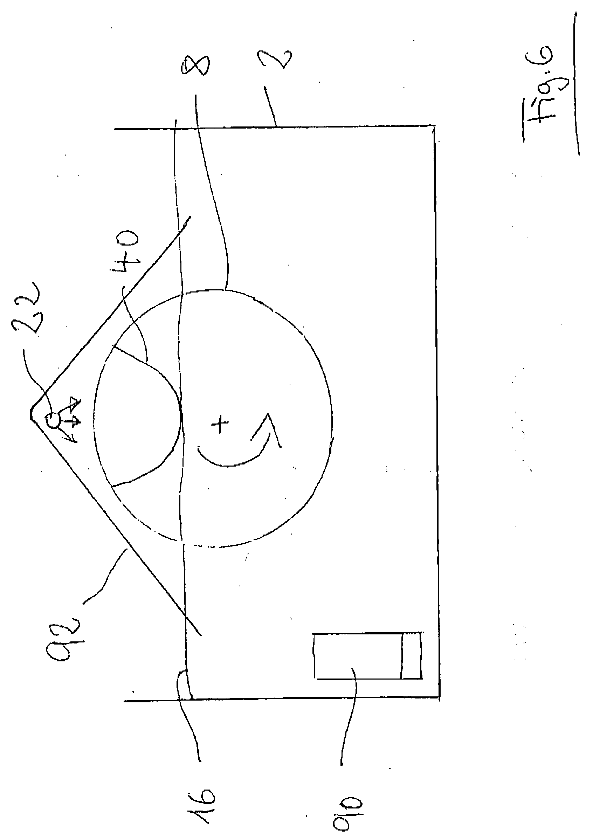

Bei herkömmlichen Trommelfiltern werden externe Pumpen zur Förderung des Teichwassers verwendet. Diese Pumpgeräusche und auch die von den Reinigungseinrichtungen des Trommelfilters emittierten Geräusche können zu einer nicht unerheblichen Geräuschentwicklung führen, die beispielsweise bei 98 Dezibel liegen kann. Figur 6 zeigt eine Seitenansicht auf einen Trommelfilter 1 dessen Grundaufbau dem erfindungsgemäßen Konzept entspricht und der zusätzlich mit einer Schallisolierung versehen ist. Um nichtakzeptable Geräuschemissionen zu vermeiden, kann - wie in Figur 6 dargestellt - eine Tauchdruckpumpe verwendet werden, die direkt in das Flüssigkeitsvolumen des Trommelfilters 1 eingesetzt ist. Die Geräuschemission derartiger Tauchpumpen 90 ist wesentlich geringer als diejenige externer Druckpumpen, die außerhalb der Trommelfilter 1 angeordnet sind. Als besonders geeignet haben sich sogenannte Bohrlochbrunnenpumpen erwiesen, mit denen man aus großen Tiefen Wasser fördern kann und die es in allen für die vorliegende Anwendung erforderlichen Durckstufen zu kaufen gibt. Bei den vorbeschriebenen Ausführungsbeispielen liegt die Reinigungseinrichtung 18, beispielsweise eine Bürste oder Sprüheinrichtung 22 oberhalb der Filtertrommel 8. Über diese Reinigungseinrichtung 18 wird der Filterkuchen vom Spaltsieb 10 gelöst und in einen Auffangbehälter 40 eingebracht. Dieser ist bei den Trommelfiltern gemäß den Figuren 1 und 2 außerhalb und bei dem Ausführungsbeispiel gemäß den Figuren 3 und 4 innerhalb der Trommel 8 angeordnet. Durch die Sprüheinrichtung 22 oder die Bürste 20 (Figur 1) werden ebenfalls erhebliche Geräuschemissionen verursacht. Diese lassen sich gemäß dem in Figur 6 dargestellten Ausführungsbeispiel durch eine Schallisolierung 92 minimieren, die diese Geräusche emittierenden Bauelemente überdeckt. Als besonders geeignet hat sich die in Figur 6 dargestellte dachförmige Struktur herausgestellt, die mit ihrem Scheitel die Sprüheinrichtung 22 oder die sonstige Reinigungseinrichtung sowie den aus der Flüssigkeit herausragenden Bereich der Filtertrommel 8 und den Auffangbehälter 40 überdeckt und mit seinen seitlichen unteren Endabschnitten in das Teichwasser oder die zu reinigende Flüssigkeit eintaucht. Diese Schallisolierung wird aus einem geeigneten Material mit guter Schalldämmung und hinreichender mechanischer Stabilität ausgeführt und kann an den Wandungen des Gehäuses 2 befestigt sein. Selbstverständlich kann die Schallisolierung 92 auch mit einer anderen Geometrie beispielsweise haubenförmig, U-förmig oder dergleichen ausgeführt sein.

Offenbart ist ein Trommelfilter für Teichanlagen oder dergleichen mit einer von einem Motor angetriebenen, in einem Gehäuse gelagerten Filtertrommel, die von der zu klärenden Flüssigkeit durchströmt wird. Die Filtertrommel ist stirnseitig zum Gehäuse hin geschlossen ausgeführt.

### Bezugszeichenliste:

- 1: Trommelfilter
- 2: Gehäuse
- 4: Zulauf
- 6: Innenraum
- 8: Filtertrommel
- 10: Spaltsieb
- 12: Filterkuchen
- 14: Auslauf
- 16: Wasserspiegel
- 18: Reinigungseinrichtung
- 20: Bürste
- 22: Sprüheinrichtung
- 24: Reinigungsbürste
- 26: Getriebemotor
- 28: Bürstenwelle
- 30: Stirnwandung
- 32: Riementrieb
- 34: Riemenscheibe
- 36: Riemenscheibe
- 38: Stirnwandung
- 40: Auffangbehälter
- 42: Schwimmer
- 44: Steigrohr
- 46: Wellenstummel
- 48: Achsstutzen
- 50: Gleitlager
- 52: Stirnplatte
- 54: Stirnplatte
- 56: Flüssigkeitszulauf
- 58: Raum
- 60: Filtratablauf
- 62: Filterkuchenablaufrohr
- 64: Achsschenkel
- 66: Gleitlager
- 68: Rückhaltelamellen
- 70: Seitenwandung
- 72: U-Profil
- 74: Klemmnocke
- 76: Klemmnocke
- 78: Längskantenbereich
- 80: Längskantenbereich
- 82: Klemmprofil
- 84: Halteschenkel
- 86: Halteschenkel
- 88: Klemmkeil
- 90: Pumpe
- 92: Schallisolierung
- 94: Bürste

## Patentansprüche

1. Trommelfilter für Teichanlagen oder dergleichen mit einer mit einem Filtermittel (10) ausgeführten, von einem Motor antreibbaren und in einem Gehäuse aufgenommenen Filtertrommel (8), die von der zu klärenden Flüssigkeit von innen nach außen durchströmt wird, wobei der sich am Filtermittel (10) absetzende Filterkuchen mit einer Reinigungseinrichtung (18) entfernbar ist, wobei die Filtertrommel (8) beidseitig zum Gehäuse (2) hin stirnseitig geschlossen ist, **gekennzeichnet durch** eine Schallisolierung, die die oberhalb des Flüssigkeitsspiegels angeordnete Reinigungseinrichtung (18) sowie den aus der Flüssigkeit herausragenden Teil der Filtertrommel (8) überdeckt, und vorzugsweise in die Flüssigkeit eintaucht, wobei das Gehäuse (2) und die Filtertrommel (8) aus Kunststoff hergestellt sind.

2. Trommelfilter nach Anspruch 1, wobei die Zu- und/oder Abführung der Flüssigkeit durch einen Achsstutzen (56) der Filtertrommel (8) hindurch erfolgt.

3. Trommelfilter nach Anspruch 1 und 2, wobei die Reinigungseinrichtung (18) eine achsparallel zur Filtertrommel (8) angeordnete Bürste oder eine entsprechende mechanische Reinigungseinrichtung hat, die zum Reinigen an einem Außenumfangsabschnitt der Filtertrommel (8) anliegt.

4. Trommelfilter nach Anspruch 3, wobei die Drehrichtung der Bürste (40) oder dergleichen umkehrbar ist.

5. Trommelfilter nach Anspruch 3 oder 4, wobei ein Antrieb (26) für die Reinigungseinrichtung (18) und die Filtertrommel (8) gekoppelt ist.

6. Trommelfilter nach Anspruch 1 und 2, wobei die Reinigungseinrichtung (18) eine Sprüheinrichtung (22) hat, wobei die Sprüheinrichtung (22) die Filtertrommel (8) und/ oder eine Bürste (20) gemäß Anspruch 3 beaufschlagt.

7. Trommelfilter nach einem der vorhergehenden Ansprüche, wobei an einer Innenumfangswandung der Filtertrommel (8) Rückhalteeinrichtungen (68) für den Filterkuchen ausgebildet sind.

8. Trommelfilter nach einem der vorhergehenden Ansprüche, wobei ein Auffangbehälter (40) innerhalb der Filtertrommel (8) angeordnet ist und über einen Filterkuchenablauf (62) gehäusefest abgestützt ist.

9. Trommelfilter nach Anspruch 8, wobei die Filtertrommel (8) auf dem Filterkuchenablaufrohr (62) gelagert ist.

10. Trommelfilter nach Anspruch 9, wobei sich das Filterkuchenablaufrohr (62) durch den hohlen Achsstutzen (48) hindurch erstreckt.

11. Trommelfilter nach einem der vorhergehenden Ansprüche, wobei der Reinigungseinrichtung (18) ein Auffangbehälter (40) für den Filterkuchen (12) zugeordnet ist.

12. Trommelfilter nach einem der vorhergehenden Ansprüche, mit einem Sensor (42) zum Erfassen des Wasserspiegels innerhalb oder außerhalb der Filtertrommel (8).

13. Trommelfilter nach einem der vorhergehenden Ansprüche, wobei die Filtertrommel (8) und das Gehäuse (2) aus Polyethylen hergestellt sind.

14. Trommelfilter nach einem der vorhergehenden Ansprüche, wobei sich in Längsrichtung erstreckende Längskantenabschnitte (78, 80) des Filtermittels (10) mittels einer Klemmeinrichtung (72, 82, 88) gespannt sind.

15. Trommelfilter nach einem der vorhergehenden Patentansprüche, wobei eine Förderpumpe (90) innerhalb des Flüssigkeitsvolumens angeordnet ist.

16. Trommelfilter nach einem der vorhergehenden Ansprüche, wobei an der Innenumfangswandung der Filtertrommel (8) eine Bürste (94) oder dergleichen zum Abstreifen von Feststoffen von mit Bezug zur Filtertrommel (8) feststehenden Bauelementen vorgesehen ist.

## Claims

1. Drum filter for pond systems or the like, comprising a filter drum (8) that is designed having a filtration means (10), can be driven by a motor and is accommodated in a housing, through which filter drum the liquid to be purified flows from the inside to the outside, the filter cake deposited on the filtration means (10) being removable by means of a cleaning device (18), the filter drum (8) being closed off from the housing (2) at the end face on both sides, **characterised by** a piece of sound insulation that covers the cleaning device (18) arranged above the liquid level and the part of the filter drum (8) protruding out of the liquid, and is preferably submerged in the liquid, the housing (2) and the filter drum (8) being made of plastics material.

2. Drum filter according to claim 1, wherein the liquid is supplied and/or removed through an axial connecting piece (56) of the filter drum (8).

3. Drum filter according to claims 1 and 2, wherein the cleaning device (18) comprises either a brush arranged axially in parallel with the filter drum (8), or a corresponding mechanical cleaning device that rests against an outer peripheral portion of the filter drum (8) for cleaning purposes.

4. Drum filter according to claim 3, wherein the direction of rotation of the brush (40) or the like is reversible.

5. Drum filter according to either claim 3 or claim 4, wherein a drive (26) for the cleaning device (18) and for the filter drum (8) are coupled.

6. Drum filter according to claims 1 and 2, wherein the cleaning device (18) comprises a spraying device (22), wherein the spraying device (22) acts on the filter drum (8) and/or a brush (20) according to claim 3.

7. Drum filter according to any one of the preceding claims, wherein trapping devices (68) for the filter cake are formed on an inner peripheral wall of the filter drum (8).

8. Drum filter according to any one of the preceding claims, wherein a collection container (40) is arranged inside the filter drum (8) and is supported above a filter cake discharge element (62) in a manner fixed relative to the housing.

9. Drum filter according to claim 8, wherein the filter drum (8) is mounted on the filter cake discharge pipe (62).

10. Drum filter according to claim 9, wherein the filter cake discharge pipe (62) extends through the hollow axial connecting piece (48).

11. Drum filter according to any one of the preceding claims, wherein the cleaning device (18) is assigned a catching container (40) for the filter cake (12).

12. Drum filter according to any one of the preceding claims, comprising a sensor (42) for measuring the water level inside or outside the filter drum (8).

13. Drum filter according to any one of the preceding claims, wherein the filter drum (8) and the housing (2) are made of polyethylene.

14. Drum filter according to any one of the preceding claims, wherein longitudinal edge portions (78, 80) of the filtration means (10) that extend in the longitudinal direction are clamped by means of a clamping device (72, 82, 88).

15. Drum filter according to any one of the preceding claims, wherein a feed pump (90) is arranged inside the liquid volume.

16. Drum filter according to any one of the preceding claims, wherein a brush (94) or the like for removing solids from components that are fixed in relation to the filter drum (8) is provided on the inner peripheral wall of the filter drum (8).

## Revendications

1. Filtre à tambour pour des étangs ou similaires, comprenant un tambour de filtre (8) réalisé avec un moyen filtrant (10), pouvant être entraîné par un moteur et logé dans un boîtier, lequel est traversé de l'intérieur vers l'extérieur par le liquide à clarifier, dans lequel le gâteau de filtre se déposant au niveau du moyen filtrant (10) peut être retiré à l'aide d'un dispositif de nettoyage (18), dans lequel le tambour de filtre (8) est fermé côté frontal en direction du boîtier (2) de part et d'autre, **caractérisé par** une isolation phonique, qui recouvre le dispositif de nettoyage (18) disposé au-dessus du niveau de liquide ainsi que la partie, sortant du liquide, du tambour de filtre (8) et qui plonge de préférence dans le liquide, dans lequel le boîtier (2) et le tambour de filtre (8) sont fabriqués à partir d'une matière plastique.

2. Filtre à tambour selon la revendication 1, dans lequel l'amenée et/ou l'évacuation du liquide sont effectuées à travers une tubulure axiale (56) du tambour de filtre (8).

3. Filtre à tambour selon la revendication 1 et 2, dans lequel le dispositif de nettoyage (18) a une brosse disposée de manière axialement parallèle par rapport au tambour de filtre (8) ou un dispositif de nettoyage mécanique correspondant, qui repose au niveau d'une section périphérique extérieure du tambour de filtre (8) aux fins du nettoyage.

4. Filtre à tambour selon la revendication 3, dans lequel le sens de rotation de la brosse (40) ou similaire est réversible.

5. Filtre à tambour selon la revendication 3 ou 4, dans lequel un entraînement (26) pour le dispositif de nettoyage (18) et pour le tambour de filtre (8) est couplé.

6. Filtre à tambour selon la revendication 1 et 2, dans lequel le dispositif de nettoyage (18) a un dispositif de pulvérisation (22), dans lequel le dispositif de pulvérisation (22) contraint le tambour de filtre (8) et/ou une brosse (20) selon la revendication 3.

7. Filtre à tambour selon l'une quelconque des revendications précédentes, dans lequel des dispositifs de retenue (68) pour le gâteau de filtre sont réalisés au niveau d'une paroi périphérique intérieure du tambour de filtre (8).

8. Filtre à tambour selon l'une quelconque des revendications précédentes, dans lequel un contenant collecteur (40) est disposé à l'intérieur du tambour de filtre (8) et prend appui de manière solidaire du boîtier par l'intermédiaire d'une sortie de gâteau de filtre (62).

9. Filtre à tambour selon la revendication 8, dans lequel le tambour de filtre (8) est monté sur le tuyau de sortie de gâteau de filtre (62).

10. Filtre à tambour selon la revendication 9, dans lequel le tuyau de sortie de gâteau de filtre (62) s'étend à travers la tubulure axiale (48) creuse.

11. Filtre à tambour selon l'une quelconque des revendications précédentes, dans lequel un contenant collecteur (40) pour le gâteau de filtre (12) est associé au dispositif de nettoyage (18).

12. Filtre à tambour selon l'une quelconque des revendications précédentes, comprenant un capteur (42) pour détecter le niveau d'eau à l'intérieur ou à l'extérieur du tambour de filtre (8).

13. Filtre à tambour selon l'une quelconque des revendications précédentes, dans lequel le tambour de filtre (8) et le boîtier (2) sont fabriqués à partir de polyéthylène.

14. Filtre à tambour selon l'une quelconque des revendications précédentes, dans lequel des sections d'arête longitudinale (78, 80), s'étendant dans la direction longitudinale, du moyen filtrant (10) sont tendues au moyen d'un dispositif de serrage (72, 82, 88).

15. Filtre à tambour selon l'une quelconque des revendications précédentes, dans lequel une pompe de refoulement (90) est disposée à l'intérieur du volume de liquide.

16. Filtre à tambour selon l'une quelconque des revendications précédentes, dans lequel une brosse (94) ou similaire pour enlever des matières solides d'éléments immobiles par rapport au tambour de filtre (8) est prévue au niveau de la paroi périphérique intérieure du tambour de filtre (8).
